# EUROPÄISCHE PATENTSCHRIFT

(11) **EP 1 945 964 B1**
(45) Veröffentlichungstag und Bekanntmachung des Hinweises auf die Patenterteilung: **13.10.2010**
(21) Anmeldenummer: 06806663.8
(22) Anmeldetag: 02.11.2006
(51) Int. Cl.: F16D 65/097

(54) **BREMSBELAGANORDNUNG**
BRAKE LINING ASSEMBLY
ENSEMBLE DE GARNITURES DE FREIN

(30) Priorität: 03.11.2005 DE 102005052438
(43) Veröffentlichungstag der Anmeldung: 23.07.2008
(73) Patentinhaber: KNORR-BREMSE Systeme für Nutzfahrzeuge GmbH, 80809 München (DE)
(72) Erfinder: KLEMENT, Roland, 82407 Haunshofen (DE); FISCHER, Rudolf, 85435 Erding (DE); LINKE, Tobias, 61118 Bad Vilbel (DE)
(74) Vertreter: Mattusch, Gundula
(86) Internationale Anmeldenummer: PCT/EP2006/010516
(87) Internationale Veröffentlichungsnummer: WO 2007/051617

(56) Entgegenhaltungen:
- EP-A1- 0 703 378
- DE-A1-102004 002 571
- US-A- 3 605 956
- US-A- 4 498 564
- US-A- 4 498 564

## Beschreibung

Die Erfindung betrifft eine Scheibenbremse für Straßenfahrzeuge mit den Merkmalen des Oberbegriffes des Anspruches 1.

Bei den bisher bekannten Bremsbelaganordnungen sind die Verbindungen zwischen den Belagträgern der Bremsbeläge so gestaltet, dass die Bremsbeläge unkontrolliert aus dem Bremssattel bzw. aus dem Bremsgehäuse entfernt werden können. Darüber hinaus müssen diese Bremsbeläge einzeln montiert werden. Der Hersteller von Bremsen hat eine Garantieleistung zu erbringen. Da die Bremsbeläge unkontrolliert entfernt werden können, sind Manipulationen möglich, so dass im Falle einer Garantieleistung der Bremsenhersteller nicht mehr kontrollieren kann, ob beispielsweise eine Fehlmontage der Bremse auf der Achse entgegen den Vorgaben erfolgt ist.

In der US 4,498,564 wird eine gattungsgemäße Scheibenbremse beschrieben. Die an Bremsbelagträgern angeordneten Bremsbeläge sind über einen Belaghalteträger miteinander verbunden. Dieser Belaghalteträger ist ein Hohlprofilabschnitt, der an der den Bremsbelägen zugewandten Seite einen Längsschlitz aufweist. Die einander zugewandt liegenden Enden greifen in Nuten des Bremsbelagträgers ein. Dieser Profilabschnitt greift in eine Nut eines Brückenelementes des Bremssattels ein.

In der DE 10 2004 002571 A1 wird ein Bremssattel für eine Scheibenbremse beschrieben, bei dem zu beiden Seiten der Bremsscheibe der Scheibenbremse Bremsbeläge in Ausnehmungen des Bremsträgers angeordnet sind. Zur axialen Führung und/oder zur Abstützung der Bremsbeläge in der Drehrichtung ist der Bremsträger mit Führungsflächen versehen, die sich über den Zustellweg der Bremsbeläge erstrecken und an denen sich korrespondierende Führungsflächen der Bremsbeläge abstützen. Die Führungsflächen der Bremsbeläge sind, bezogen auf die Mitten der Bremsbeläge in der Drehrichtung, symmetrisch angeordnet und gestaltet, so dass sich die zueinander korrespondierenden Vorsprünge und Aussparungen außerhalb der Führungsflächen des Bremsträgers und der Bremsbeläge befinden.

Durch diese Anordnung soll erreicht werden, dass die als Einzelteile angelieferten Bauteile der Scheibenbremse in einfacher Weise montiert werden können. Durch die Verbindung der Bremsbelagträger wird zwar eine Baueinheit gebildet, jedoch lassen sich Fehlmontagen nicht nachweisen.

Der Erfindung liegt die Aufgabe zugrunde, eine Bremsbelaganordnung der eingangs näher beschriebenen Art so zu gestalten, dass Fehlmontagen ausgeschlossen werden können, und dass die Kontrollmöglichkeiten für den Bremsenhersteller im Falle einer Garantieleistung zweifelsfrei gegeben ist.

Die gestellte Aufgabe wird gemäß einem ersten Lösungsvorschlag durch den Gegenstand des Anspruchs 1 und gemäß eines zweiten Lösungsvorschlages durch den Gegenstand des nebengeordneten Anspruches 2 gelöst.

Dadurch wird auf einfache Weise die für Bremsungen notwendige Verschieblichkeit des zuspannseitigen Belages gewährleistet und es wird ergänzend eine den Aufbau und die Montage vereinfachende Montageeinheit realisierbar.

Vorzugsweise bilden ferner und wenigstens einer der beiden beidseitig der Bremsscheibe anzuordnenden Bremsbeläge und der Belaghaltebügel oder beide Bremsbeläge und der Belaghaltebügel die Montagebaueinheit.

Durch die Montagebaueinheit wird es möglich, einen oder beide Bremsbeläge und den Belaghaltebügel und ggf. die Haltefeder, wenn vorhanden, als Baugruppe zur Montage bereitzustellen. Diese Art der Montage ist einfach. Darüber hinaus ermöglicht sie beispielsweise die Erkennung eines unterschiedlichen Verschleißes der beidseitig der Bremsscheibe angeordneten Bremsbeläge. Darüber hinaus kann auch eine Fehlmontage der Bremse auf der Achse entgegen den Vorgaben des Pflichtenheftes erkannt werden. Werden beide Beläge gemeinsam vormontiert, lässt sich dennoch eine kompakte achsweise Verpackung dadurch realisieren, dass je zwei vormontierte Einheiten ineinander geschoben und verpackt und dann gemeinsam zum Montageort transportiert werden.

Um die für die Bremsungen geforderte Verschieblichkeit zu realisieren, ist es vorteilhaft, dass einer der Beläge relativ zum anderen beweglich ist. Durch die zwischen dem beweglichen Bremsbelag oder seiner Haltefeder und dem Belaghaltebügel angeordnete verschiebliche Nut-Federverbindung wird eine konstruktiv einfache, betriebssichere Lösung erreicht. Alternativ wird jedoch auch eine konstruktiv einfache Lösung realisiert, wenn im Belaghaltebügel ein Langloch ausgebildet ist, das von einem T-Stückansatz am Belagträger oder der Haltefeder durchsetzt ist.

Die Bildung der Montagebaugruppe lässt sich konstruktiv in einfachster Weise umsetzen, wenn diese durch formschlüssige Verbindungen zwischen den Belagträgern der Bremsbeläge und dem Belaghaltebügel gebildet ist. Durch die formschlüssigen Verbindungen ist einerseits sichergestellt, dass die Bremsbeläge mit dem Belaghaltebügel nur als Baueinheit entnommen werden können, und dass die Montage an der Zuspanneinheit so ausgeführt werden kann, dass die Demontage nur durch eine Zerstörung möglich ist. Damit die Bremsbeläge nicht von dem Belaghaltebügel heruntergleiten, ist vorgesehen, dass der Belaghaltebügel in jedem Endbereich zur axialen Begrenzung der Bewegungen der Bremsbeläge einen Anschlag aufweist. Dieser Anschlag ist so gestaltet, dass er nicht demontiert werden kann. Dies ist in besonders vorteilhafter Weise möglich, wenn jeder Anschlag durch Kaltverformung des zugehörigen Bereiches des Belaghaltebügels gebildet ist. Dies kann beispielsweise durch eine Prägung erfolgen.

Die Montageeinheit ist derart ausgelegt, daß sie am Bremssattel auf einfache Wiese festgelegt werden kann, so daß sie am Bremssattel gehalten ist.

In weiterer Ausgestaltung ist noch vorgesehen, dass ein Endbereich des Belaghaltebügels innerhalb des Bremssattels liegt und dass der dem Bremssattel abgewandt liegende Bereich in einem Halteschuh eingreift. Durch die konstruktive Gestaltung des Belaghaltebügels können typgebundene oder kundenspezifische Varianten erzeugt werden. Durch den Halteschuh wird der Belaghaltebügel an der dem Bremssattel gegenüberliegenden Seite fixiert. Die Gestaltung sollte so gewählt werden, dass für bestimmte Typen oder Kunden ausgelegte Bremsen versehentlich nicht vertauscht werden können.

In einer weiteren bevorzugten Ausführung ist vorgesehen, dass der Belaghaltebügel als Flachteil ausgebildet ist. In den Endbereichen ist der Belaghaltebügel gekröpft, wodurch die typgebundene bzw. kundenspezifische Gestaltung in einfachster Weise gegeben ist. Die den Belagträgern zugeordneten Bereiche der Belaghaltebügel sind über Haltefedern mit dem Belaghaltebügel verbunden. Diese Haltefedern sind mittels mechanischer Verbindungselemente mit den Belagträgern der Bremsbeläge fest verbunden. Derartige Verbindungselemente sind beispielsweise Niete.

Der Belaghaltebügel ist vorzugsweise mit einer Kennung in Form einer Buchstaben- und/oder Ziffernkombination und/oder Symbolen versehen. Dadurch können die Bremsbeläge durch eine entsprechende Speicherung in einer Datenbank zweifelsfrei und eindeutig einer bestimmten Bremse zugewiesen werden. Somit lassen sich Manipulationen feststellen.

Anhand der beiliegenden Zeichnungen wird die Erfindung noch näher erläutert. Es zeigen:
- Figur 1: eine Scheibenbremse in einem Teilaufriß; und
- Figur 2: eine der Figur 1 entsprechende Teildraufsicht; und
- Figur 3: eine Teilansicht des zuspannseitigen Belages an dem Belaghaltebügel.

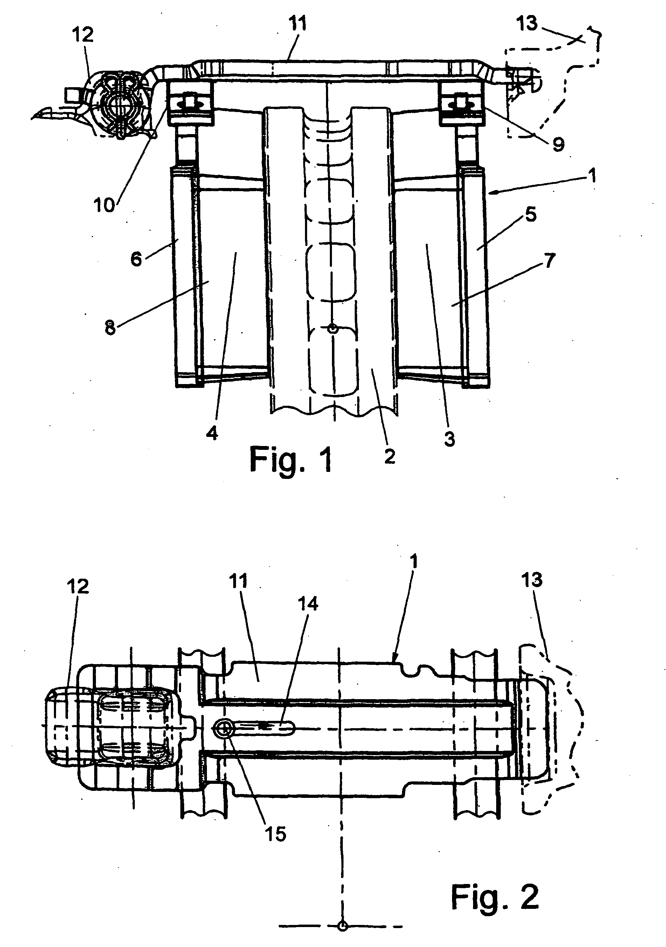

Die in den Figuren 1 und 2 teilweise dargestellte Scheibenbremse 1 enthält eine Bremsscheibe 2, die im mittleren Bereich mit einer Umfangsnut versehen ist. Beidseitig der Bremsscheibe 2 sind zwei Bremsbeläge 3, 4 angeordnet, die jeweils aus einem Belagträger 5, 6 und den Bremsmaterialien 7, 8 bestehen.

Die Belagträger 5, 6 sind über blattfederhalterartige Haltefedern 9, 10 mit einem Belaghaltebügel 11 formschlüssig verbunden und bilden eine montierte Baueinheit, die am Bremssattel 12 gehalten sind. Die Haltefeder 9, 10 sind vorzugsweise derart fest mit den Belagträgern 5, 6 verbunden, so dass sie nur unter Zerstörung vom Belagträger 5, 6 gelöst werden können.

Dieser Belaghaltebügel 11 greift mit seinem in der Darstellung linken Endbereich in den andeutungsweise dargestellten Bremssattel 12 ein, während das gegenüberliegende Ende in einen Halteschuh 13 eingreift. Der Belaghaltebügel 11 ist als Flachteil ausgebildet und in den Endbereichen gekröpft. Durch diese Kröpfung in Verbindung mit den Haltefedern 9, 10 werden die formschlüssigen Verbindungen zwischen den Belagträgem 5, 6 und dem Belaghaltebügel 11 erreicht. Im dargestellten Ausführungsbeispiel wird durch die gekröpften Endbereiche außerdem erreicht, dass die Bremsbeläge 3, 4 mit ihren Belagträger 5, 6 zu weit auseinander gefahren werden können.

Die Figuren 1 und 2 zeigen, dass die Bremsbeläge 3, 4 und der Belaghaltebügel 11 eine Montagebaueinheit bilden, die nur als Ganzes demontierbar ist. Über die bereits genannten entsprechenden Vorkehrungen, kann nach der Demontage jederzeit eine Fehlmontage oder auf eine unsachgemäße Behandlung entgegen den eindeutigen Vorgaben nachgewiesen werden.

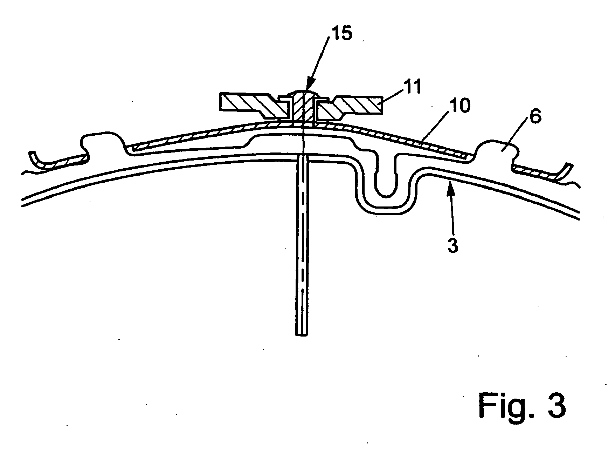

Nach Fig. 3 ist der Bremsbelag 4 dadurch beweglich an der Bremsbelaganordnung angebracht, dass im Belaghaltebügel 11 ein Langloch 14 ausgebildet ist, das von einem T-Stückansatz 15 am Belagträger (und/oder an der Haltefeder 10) durchsetzt ist, um derart die für Bremsungen notwendige Verschieblichkeit des zuspannseitigen Belages zu gewährleisten.

Die Erfindung ist nicht auf das dargestellte Ausführungsbeispiel beschränkt. Wesentlich ist, dass aus den Bremsbelägen 3, 4 und dem Belaghaltebügel 11 eine Montagebaueinheit gebildet wird, indem die Endbereiche des Belaghaltebügels 11 mit den Bremsbelägen 3, 4, insbesondere mit den Belagträgern 5, 6 formschlüssig verbunden sind, so dass die Bremsbeläge einzeln nicht demontierbar sind. Durch die entsprechenden formschlüssigen Verbindungen lässt sich nachweisen, dass eine Fehlmontage der Bremse vorliegen könnte und dass die einschlägigen Vorgaben nicht beachtet wurden.

### Bezugszeichen

- Scheibenbremse: 1
- Bremsscheibe: 2
- Bremsbeläge: 3,4
- Belagträger: 5, 6
- Bremsmaterialien: 7, 8
- Haltefedern: 9, 10
- Belaghaltebügel: 11
- Bremssattel: 12
- Halteschuh: 13
- Langloch: 14
- T-Stückansatz: 15

## Patentansprüche

1. Scheibenbremse (1) für Straßenfahrzeuge, mit einem Bremssattel (12), der mit Bremsbelagschächten versehen ist, in die jeweils ein Bremsbelag (3, 4) und gegebenenfalls eine Druckverteilerplatte einsetzbar ist, und mit einer Bremsbelaganordnung, bei der die beidseitig der Bremsscheibe (2) angeordneten Bremsbeläge (3, 4) mittels eines mit dem Bremssattel (12) verbundenen Belaghaltebügel (11) gesichert sind, der auf eine vorgespannte, auf die Umfangsfläche des Bremsbelagträgers (5, 6) des Bremsbelages (3, 4) gepresste Blattfeder einwirkt, wobei einer der Bremsbeläge (4) relativ zum anderen Bremsbelag (3) **dadurch** beweglich ist, dass zwischen dem beweglichen Bremsbelag (4) und ggf. der Haltefeder (10) und dem Belaghaltebügel (11) eine verschiebliche Nut-Feder-Verbindung ausgebildet ist, und dass wenigstens einer oder beide Bremsbeläge (3, 4) an dem Belaghaltebügel (11) befestigt sind, dass zumindest einer der Bremsbeläge oder beide Bremsbeläge (3, 4) mit dem Belaghaltebügel (11) eine Montagebaueinheit bilden, **dadurch gekennzeichnet, dass** die Montagebaueinheit durch formschlüssige Verbindungen zwischen den Belagträgem (5, 6) der Bremsbeläge (3, 4) und dem Belaghaltebügel (11) derart gebildet ist, dass die Bremsbeläge mit dem Belaghaltebügel (11) nur als Baueinheit entnehmbar sind, und dass der Belaghaltebügel (11) in jedem Endbereich zur axialen Begrenzung der Bewegungen der Bremsbeläge (3, 4) einen Anschlag aufweist, der so gestaltet ist, dass er nicht demontiert werden kann.

2. Scheibenbremse für Straßenfahrzeuge mit den Merkmalen des Oberbegriffes des Anspruches 1, **dadurch gekennzeichnet, dass** im Belaghaltebügel (11) ein Langloch (14) ausgebildet ist, das von einem T-Stückansatz (15) am Belagträger (5, 6) oder an der Haltefeder (10) durchsetzt ist.

3. Scheibenbremse nach Anspruch 1, **dadurch gekennzeichnet, dass** jeder Anschlag durch Kaltverformung des zugehörigen Bereiches des Belaghaltebügels (11) gebildet ist, beispielsweise durch eine Prägung.

4. Scheibenbremse nach einem der vorstehenden Ansprüche, **dadurch gekennzeichnet, daß** die Baueinheit, insbesondere der Belaghaltebügel (11), am Bremssattel (12) gehalten ist.

5. Scheibenbremse nach einem der vorstehenden Ansprüche, **dadurch gekennzeichnet, dass** ein Endbereich des Belaghaltebügels (11) innerhalb des Bremssattels (12) liegt, und dass der dem Bremssattel (12) gegenüberliegende Endbereich in einem Halteschuh (13) eingreift.

6. Scheibenbremse nach einem oder mehreren der vorstehenden Ansprüche, **dadurch gekennzeichnet, dass** die Endbereiche des Belaghaltebügels (11) typgebunden oder kundenspezifisch ausgebildet sind.

7. Scheibenbremse nach einem oder mehreren der vorstehenden Ansprüche, **dadurch gekennzeichnet, dass** der Belaghaltebügel (11) als Flachteil ausgebildet ist.

8. Scheibenbremse nach einem oder mehreren der vorstehenden Ansprüche, **dadurch gekennzeichnet, dass** die Endbereiche des Belaghaltebügels (11) durch Haltefedern (9, 10) mit den Bremsbelägen (3, 4), vorzugsweise mit den Belagträgern (5, 6) verbunden sind.

9. Scheibenbremse nach Anspruch 6, **dadurch gekennzeichnet, dass** die Haltefedern (9, 10) mittels mechanischer Verbindungselemente mit den Belagträgern (5, 6) der Bremsbeläge (3, 4) verbunden sind.

10. Scheibenbremse nach einem oder mehreren der vorstehenden Ansprüche, **dadurch gekennzeichnet, dass** der Belaghaltebügel (11) mit einer Kennung in Form von Buchstaben- und/oder Ziffernkombinationen und/oder Symbolen versehen ist.

11. Scheibenbremse nach einem oder mehreren der vorstehenden Ansprüche, **dadurch gekennzeichnet, dass** einer der Bremsbeläge (4) relativ zum anderen beweglich an der Bremsbelaganordnung geführt ist.

## Claims

1. A disc brake (1) for road vehicles having a brake caliper (12) which is provided with brake lining layers into which in each case one brake lining (3, 4) and optionally one pressure distributor plate can be inserted, and with a brake lining assembly in which the brake linings (3, 4) arranged on either side of the brake disk (2) are secured by means of a lining holding bracket (11) which is connected to the brake caliper (12) and acts on a prestressed leaf spring which is pressed onto the circumferential face of the lining carrier (5, 6) of the brake lining (3, 4), it being possible to move one of the brake linings (4) relative to the other brake lining (3) by virtue of a mobile tongue and groove joint configured between the brake lining (4) and optionally the holding spring (10) and the lining holding bracket (11) and the fact that at least one or both of the brake linings (3, 4) are fixed to the lining holding bracket (11) and at least one or both brake linings (3, 4) form an assembly unit with the lining holding bracket (11), **characterized in that** the assembly unit is formed by positive connections between the lining carriers (5, 6) of the brake linings (3, 4) and the lining holding bracket (11) such that the brake linings can only be removed as one assembly unit with the lining holding bracket (11), and that the lining holding bracket (11) has a stop at each end to axially delimit the movements of the brake linings (3, 4) which is configured such that it cannot be removed.

2. A disc brake for road vehicles as claimed in the pre-characterizing clause of claim 1, **characterized in that** formed in the lining holding bracket (11) is a slot (14) through which a T-attachment (15) passes at the lining carrier (5, 6) or the holding spring (10).

3. A disc brake as claimed in claim 1, **characterized in that** each stop is formed by cold working of the relevant region of the lining holding bracket (11), for example by stamping.

4. A disc brake as claimed in one of the preceding claims, **characterized in that** the assembly unit, in particular the lining holding bracket (11), is held on the brake caliper (12).

5. A disc brake as claimed in one of the preceding claims, **characterized in that** an end region of the lining holding bracket (11) lies within the brake caliper (12) and that the end region which lies opposite the brake caliper (12) engages in a holding shoe (13).

6. A disc brake as claimed in one or more of the preceding claims, **characterized in that** the end regions of the lining holding bracket (11) are configured such that they are type-dedicated or customer-specific.

7. A disc brake as claimed in one or more of the preceding claims, **characterized in that** the lining holding bracket (11) is configured as a flat part.

8. A disc brake as claimed in one or more of the preceding claims, **characterized in that** the end regions of the lining holding bracket (11) are connected by holding springs (9, 10) to the brake linings (3, 4), preferably to the lining carriers (5, 6).

9. A disc brake as claimed in claim 6, **characterized in that** the holding springs (9, 10) are connected by means of mechanical connecting elements to the lining carriers (5, 6) of the brake linings (3, 4).

10. A disc brake as claimed in one or more of the preceding claims, **characterized in that** the lining holding bracket (11) is provided with an identification in the form of letter and/or number combinations and/or symbols.

11. A disc brake as claimed in one or more of the preceding claims, **characterized in that** one of the brake linings (4) is guided on the brake lining assembly such that it can move relative to the other.

## Revendications

1. Frein (1) à disque pour des véhicules routiers, comprenant un étrier (12) de frein, qui est doté de puits de garniture de frein, dans lesquels respectivement une garniture (3, 4) de frein et, le cas échéant, une plaque formant répartiteur de pression peut être insérée, et comprenant un agencement de garnitures de frein, dans lequel les garnitures (3, 4) de frein disposées de part et d'autre du disque (2) de frein sont fixées au moyen d'un étrier (11) de maintien de garniture relié à l'étrier (12) de frein et agissant sur un ressort à lame précontraint et pressé sur la surface périphérique du support (5, 6) de la garniture (3, 4) de frein, l'une des garnitures (4) de frein étant mobile par rapport à l'autre garniture (3) de frein par le fait qu'il est formé une liaison coulissante à tenon et mortaise entre la garniture (4) de frein mobile et, le cas échéant, le ressort (10) de maintien et l'étrier (11) de maintien de garniture et en ce que au moins l'une ou les deux garnitures (3, 4) de frein sont fixées à l'étrier (11) de maintien de garniture, en ce que au moins l'une des garnitures de frein ou les deux garnitures (3, 4) de frein forment une unité de construction de montage avec l'étrier (11) de maintien de garniture, **caractérisé en ce que** l'unité de montage est formée par liaison par complémentarité de forme entre les supports (5, 6) des garnitures (3, 4) de frein et l'étrier (11) de maintien de garniture, de manière à ne pouvoir enlever, que sous la forme d'une unité de construction, les garnitures de frein avec l'étrier (11) de maintien de garniture, et **en ce que** l'étrier (11) de maintien
de garniture a dans chaque partie d'extrémité, pour la limitation axiale des déplacements des garnitures (3, 4) de frein, une butée qui est telle qu'elle ne peut pas être démontée.

2. Frein à disque court des véhicules routiers ayant les caractéristiques du préambule de la revendication 1, **caractérisé en ce qu'**il est formé, dans l'étrier (11) de maintien de garniture, une boutonnière (14), dans laquelle passe un prolongement ((15) en T du support (5, 6) de garniture ou du ressort (10) de maintien.

3. Frein à disque court suivant la revendication 1, **caractérisé en ce que** chaque butée est formée par formage à froid de la partie associée de l'étrier (11) de maintien de garniture, par exemple par un estampage.

4. Frein à disque court suivant l'une des revendications précédentes, **caractérisé en ce que** l'unité de construction, notamment l'étrier (11) de maintien de garniture, est maintenue sur l'étrier (12) de frein.

5. Frein à disque court suivant l'une des revendications précédentes, **caractérisé en ce qu'**une partie d'extrémité de l'étrier (11)de maintien de garniture se trouve à l'intérieur de l'étrier (12) de frein et **en ce que** la partie d'extrémité opposée à l'étrier (12) de frein pénètre dans un sabot (13) de maintien.

6. Frein à disque court suivant l'une ou plusieurs des revendications précédentes, **caractérisé en ce que** les parties d'extrémité de l'étrier (11) de maintien de garniture sont constituées d'une manière liée au type ou spécifique au client.

7. Frein à disque court suivant l'une ou plusieurs des revendications précédentes, **caractérisé en ce que** l'étrier (11) de maintien de garniture est constitué sous la forme d'une pièce plate.

8. Frein à disque court suivant l'une ou plusieurs des revendications précédentes, **caractérisé en ce que** les parties d'extrémité de l'étrier (11) de maintien de garniture sont reliées aux garnitures (3, 4) de frein, de préférence aux supports (5, 6) de garniture, par des ressorts (9, 10) de maintien.

9. Frein à disque court suivant la revendication 6, **caractérisé en ce que** les ressorts (9, 10) de maintien sont reliés aux supports (5, 6) des garniture (3, 4) de frein au moyen d'éléments de liaison mécanique.

10. Frein à disque court suivant l'une ou plusieurs des revendications précédentes, **caractérisé en ce que** l'étrier (11) de maintien de garniture est muni d'une caractérisation, sous la forme d'une combinaison de lettres et/ou de chiffres et/ou de symboles.

11. Frein à disque court suivant l'une ou plusieurs des revendications précédentes, **caractérisé en ce que** l'une des garnitures (4) de frein est guidée par rapport à l'autre en étant mobile sur l'agencement de garniture de frein.
